# EUROPEAN PATENT APPLICATION

(11) **EP 2 505 763 A1**
(43) Date of publication of application: **03.10.2012**
(21) Application number: 11160501.0
(22) Date of filing: 30.03.2011
(51) Int. Cl.: E21B 23/00, B60K 17/14

(54) **Downhole driving unit having a hydraulic motor with a static cam ring**

(71) Applicant: Welltec A/S, 3450 Allerød (DK)
(72) Inventor: Hallundbæk, Jørgen, 3230 Græsted (DK)
(74) Representative: Dragsted, Helle Rude

(57) **Abstract**

The present invention relates to a downhole driving unit (11) for insertion into a well, comprising a driving unit housing (51), a hydraulic motor (23) comprising a hydraulic motor housing (93), the hydraulic motor comprising a cam ring (24), a wheel assembly (90) comprising a stationary part (91) and a rotational part (92), the stationary part being connected with the driving unit housing and rotatably connected with a rotational part, the stationary part and the rotational part constituting the hydraulic motor housing, said hydraulic motor comprising a rotatable section (84) connected with the rotational part, the cam ring being connected with or forming part of the stationary part of the wheel assembly, the rotational part comprising a wheel ring (99), wherein a bearing (36) is arranged between the cam ring and the wheel ring. The present invention also relates to a downhole system comprising the driving unit and to use of such driving unit.

## Description

### Field of the invention

The present invention relates to a downhole driving unit for insertion into a well, comprising a driving unit housing, a hydraulic motor comprising a hydraulic motor housing, the hydraulic motor comprising a cam ring, a wheel assembly comprising a stationary part and a rotational part, the stationary part being connected with the driving unit housing and rotatably connected with a rotational part, the stationary part and the rotational part constituting the hydraulic motor housing, said hydraulic motor comprising a rotatable section connected with the rotational part, the cam ring being connected with or forming part of the stationary part of the wheel assembly, the rotational part comprising a wheel ring, wherein a bearing is arranged between the cam ring and the wheel ring. The present invention also relates to a downhole system comprising the driving unit and to use of such driving unit.

### Background art

When operating in a downhole well, tools used for the operation may not be submergible themselves. Some tools are positioned at the front of coiled tubing and are driven forward by pushing the tubing further down the well. Other tools are lowered into the well by means of a wireline, and gravity will thus ensure that the tool submerges. Hence, not all tools are capable of moving in the well and thus need to be moved forward in the well by an additional tool. In particular, this is the case in the horizontal part of the well, as gravity cannot aid in the movement.

Several tools have been developed for this purpose, *inter alia* one running on a caterpillar track. However, this tool has the disadvantage that it cannot always hold its footing in the more uneven parts of the well, and in some cases it is impossible for such a tool to pass a place where two well pipes meet but do not abut hence leaving a gap. Another tool has wheels driven by means of a roller chain and all driven by one motor. However, if the motor is unable to drive all wheels, the tool is unable to drive itself any further. This may be the case, if the well has an obstacle and one wheel is unable to be driven across the obstacle.

### Summary of the invention

It is an object of the present invention to wholly or partly overcome the above disadvantages and drawbacks of the prior art. More specifically, it is an object to provide an improved downhole tool for moving an operational tool forward in all parts of a well and also in wells having a small inner diameter, such as 2 1/8 inches.

The above objects, together with numerous other objects, advantages, and features, which will become evident from the below description, are accomplished by a solution in accordance with the present invention by a downhole driving unit for insertion into a well, comprising:
- a driving unit housing,
- a hydraulic motor comprising a hydraulic motor housing, the hydraulic motor comprising a cam ring,
- a wheel assembly comprising a stationary part and a rotational part, the stationary part being connected with the driving unit housing and rotatably connected with a rotational part, the stationary part and the rotational part constituting the hydraulic motor housing, said hydraulic motor comprising a rotatable section connected with the rotational part, the cam ring being connected with or forming part of the stationary part of the wheel assembly, the rotational part comprising a wheel ring,
wherein a bearing is arranged between the cam ring and the wheel ring.

In one embodiment, the hydraulic motor may be a radial piston motor.

Also, the bearing arranged between the cam ring and the wheel ring may be a ball bearing.

In another embodiment, the wheel assembly may be suspended in the driving unit housing.

The downhole driving unit according to the present invention may further comprise an arm assembly movable between a retracted position and a projecting position in relation to the driving unit housing, wherein the arm assembly is connected with or forms part of the stationary part of the wheel assembly.

Additionally, the downhole driving unit according to the invention may further comprise an arm activation assembly arranged in the driving unit housing for moving the arm assembly between the retracted position and the projecting position.

Moreover, the wheel assembly may further comprise a planetary gearing system.

Further, the rotatable section of the hydraulic motor may be connected with a sun gear of the planetary gearing system.

Said planetary gearing system may be comprised in the hydraulic motor housing.

In one embodiment, the rotational part may comprise a wheel ring closed from one end by a closing member.

Also, the planetary gearing system may comprise a ring gear constituted by the wheel ring or the closing member.

In addition, the planetary gearing system may comprise planet gears engaging the sun gear and the ring gear, the planet gears being interconnected by means of a carrier member.

Furthermore, the arm assembly may comprise a wheel arm, and the wheel arm may comprise fluid channels for providing fluid to and from the hydraulic motor through the stationary part.

The downhole driving unit according to the invention may further comprise a pump for providing fluid to the hydraulic motor.

Moreover, the rotatable section may be a hydraulic cylinder block.

Said hydraulic motor may comprise pistons movable within cylinders in the hydraulic cylinder block.

Also, the hydraulic cylinder block may comprise cylinders in which a piston moves in each of the cylinders, the piston comprising a piston body and a ball bearing suspended in a piston body so that the ball bearing abuts the cam ring.

Additionally, the hydraulic cylinder block may comprise fluid channels arranged in alignment with the fluid channels in the wheel arm so that fluid is led from the wheel arm to cylinders in the hydraulic cylinder block.

The present invention also relates to a downhole system comprising the driving unit according to the invention and an operational tool connected with the driving unit for being moved forward in a well or borehole.

The operational tool may be a stroker tool, a key tool, a milling tool, a drilling tool, a logging tool, etc.

Furthermore, the present invention relates to a use of the driving unit according to the invention in a well or borehole for moving itself and/or an operational tool forward in a well or borehole.

### Brief description of the drawings

The invention and its many advantages will be described in more detail below with reference to the accompanying schematic drawings, which for the purpose of illustration show some non-limiting embodiments and in which
Fig. 1 shows a downhole tool such as a driving unit in a well,
Fig. 2 shows the wheel shown in Fig. 1 in another view,
Fig. 3 shows another downhole tool such as a driving unit in a well,
Fig. 4 shows the wheel shown in Fig. 3 in another view,
Fig. 5A shows a cross-sectional view of the wheel shown in Fig. 3,
Fig. 5B shows another cross-sectional view of the wheel of Fig. 5A,
Fig. 6 shows an arm activation assembly,
Fig. 7A shows a cross-sectional view of another embodiment of the wheel shown in Fig. 1,
Fig. 7B shows another cross-sectional view of the wheel of Fig. 7A,
Fig. 8A shows a cross-sectional view of another embodiment of the wheel,
Fig. 8B shows another cross-sectional view of the wheel of Fig. 8A,
Fig. 9 shows a cross-sectional view of another embodiment of the wheel, and
Fig. 10 shows a downhole system.

All the figures are highly schematic and not necessarily to scale, and they show only those parts which are necessary in order to elucidate the invention, other parts being omitted or merely suggested.

### Detailed description of the invention

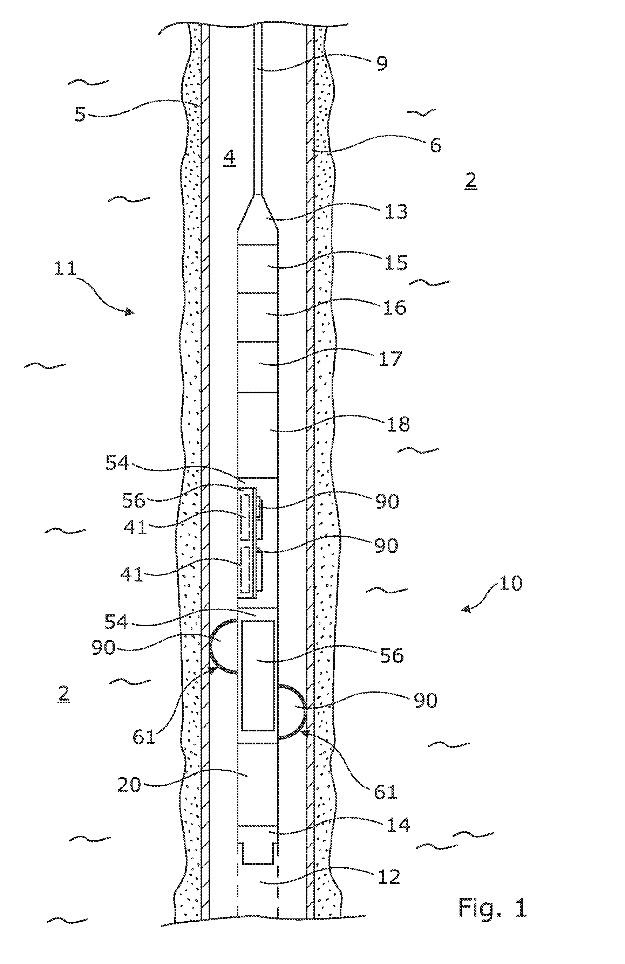

Fig. 1 shows a downhole tool, such as driving unit 11, arranged in a casing in a well or borehole. The downhole tool is powered through a wireline 9 which is connected with the tool via a top connector 13. The downhole tool further comprises an electronic section having mode shift electronics 15 and control electronics 16 before the electricity is supplied to an electrical motor 17 driving a hydraulic pump 18. In Fig. 1, the downhole tool is a driving unit 11 having a driving unit housing 51 in which wheel assemblies 90 are suspendedly connected. The driving unit 11 is connected with a compensating device 20 for compensating the pressure within the driving unit so that a high pressure does not result in the driving unit housing bulging outwards or collapsing inwards.

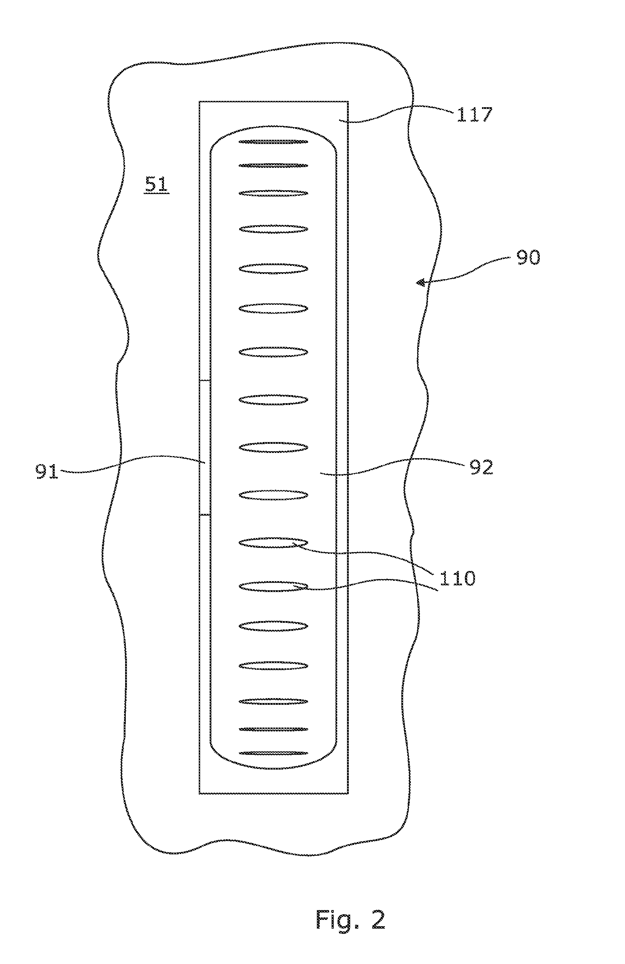

As shown in Fig. 1, part of the wheel assembly 90 projects from the driving unit housing 51 and the other part remains in a slot 117 in the driving unit housing as shown in Fig. 2. The wheel assembly 90 comprises a stationary part 91 and a rotational part 92. The stationary part 91 is connected with the driving unit housing 51 and is rotatably connected with the rotational part 92.

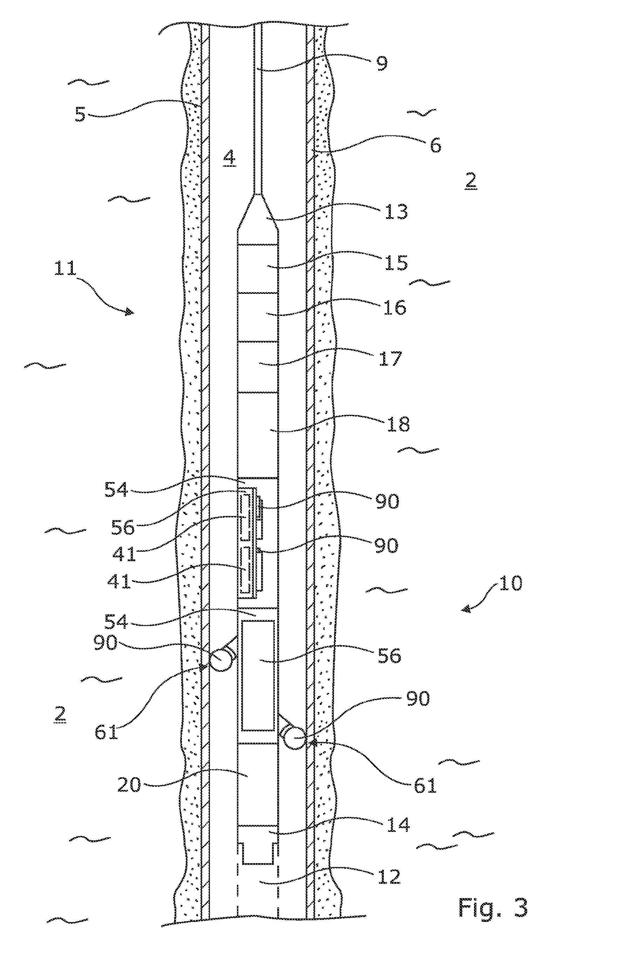

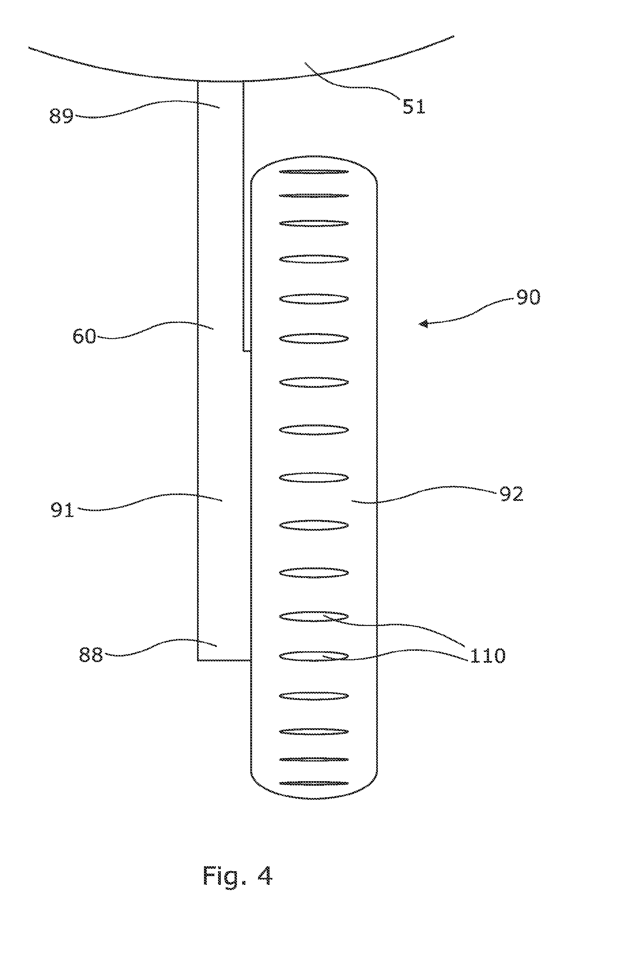

In Fig. 3, the downhole tool is also a driving unit 11 having a driving unit housing 51 in which arm assemblies 60 are moved between a retracted position and a projecting position in relation to the driving unit housing 51 along a longitudinal axis of driving unit 11 by means of fluid from the hydraulic pump. In Fig. 3, an arm assembly 60 is shown in its projecting position. As shown in Fig. 4, part of the arm assembly 60 projects from the driving unit housing 51 and the other part is connected with the wheel assembly 90. The wheel assembly 90 comprises a stationary part 91 and a rotational part 92. The stationary part 91 is connected with the arm assembly 60 or forms part of the arm assembly and is rotatably connected with the rotational part 92.

The driving unit 11 may be inserted into a well and propels itself forward and is capable of moving an operational tool forward in the well. To be able to propel itself, the driving unit comprises several wheel assemblies 90 either suspended directly in the driving unit housing 51 or arranged in a first end 88 of the arm assembly 60 furthest away from the end 89 closest to the driving unit housing 51 when the arm is in its projecting position, as shown in Figs. 3 and 4.

The rotational part 92 is fixedly connected with or forms part of a wheel ring 99 which is the outermost part of the wheel assembly 90 contacting an inner surface of the casing 6 or borehole 4. On its outside, the wheel ring 99 has indentations 110 to obtain a better grip in the casing wall or the borehole wall as shown in Figs. 2 and 4.

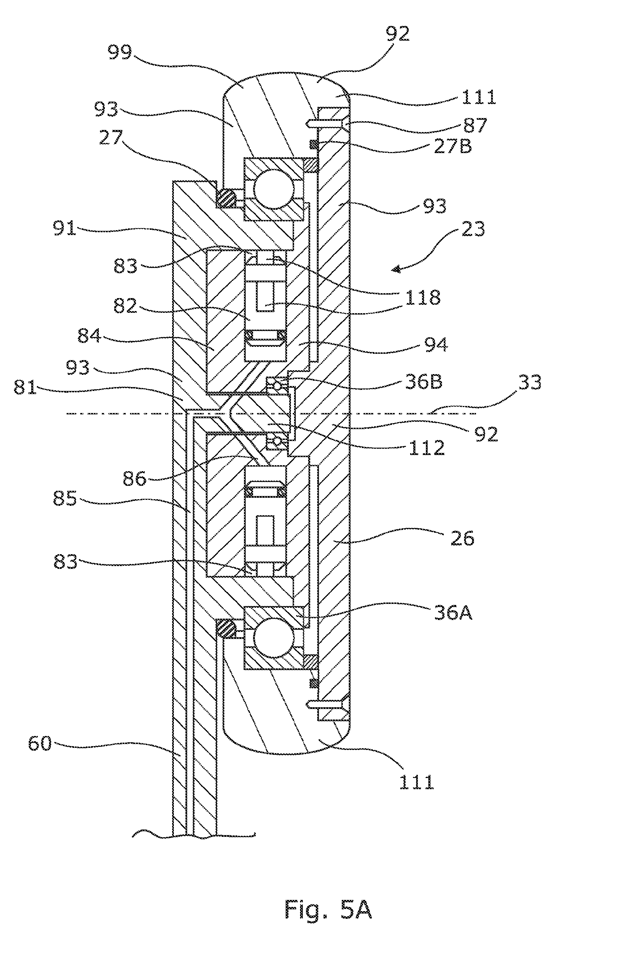

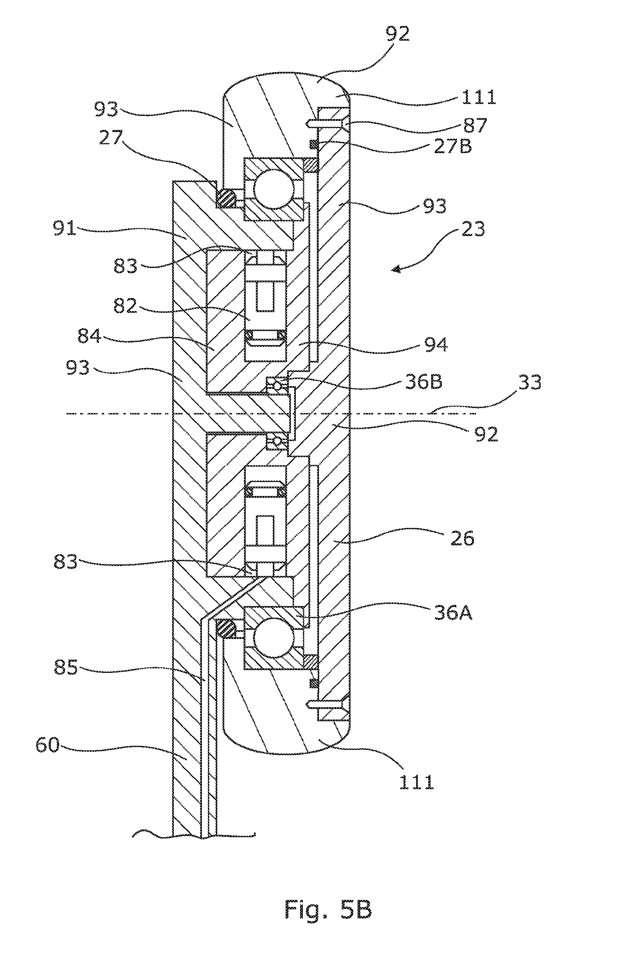

In Figs. 5A and 5B, the wheel assembly 90 is connected with a wheel arm 81 of the arm assembly 60 as shown in Figs. 3 and 4. The wheel assembly 90 rotates around a wheel rotation axis 33. In order to propel itself forward in the well, each wheel assembly 90 comprises a hydraulic motor 23. The hydraulic motor 23 has a hydraulic motor housing 93 and a rotatable section 84 connected with the rotational part 92 for rotating part of the wheel assembly 90 and thus drive the wheel ring 99 and the driving unit 11 forward in the well.

The hydraulic motor 23 comprises a cam ring 24 forming part of the stationary part 91 of the wheel assembly 90 as shown in Figs. 5A and 5B. The stationary part and the rotational part constitute the hydraulic motor housing 93, in which the rotatable section 84 of the hydraulic motor 23 rotates in relation to the cam ring 24 driving the rotational part 92 of the wheel assembly 90. Thus, the cam ring 24 is stationary and a ball bearing 36 is arranged on an outside of the cam ring 24 between the cam ring 24 and the wheel ring 99 in order to provide a simple and substantially friction-free transition between the rotatable wheel ring and the stationary cam ring. By arranging the transition between the rotational part 92 and the stationary part 91 of the wheel assembly 90 between the cam ring 24 and the wheel ring 99, a more friction-free transition is provided in that a ball bearing 36 can be arranged therebetween. Furthermore, a more fluid tight hydraulic motor housing is provided. In Figs. 5A-7, the bearing between the wheel ring 99 and the cam ring 24 is a ball bearing, but in another embodiment, the bearing may be another bearing providing a substantially friction-free transition between the cam ring 24 and the wheel ring 99.

The wheel assembly 90 comprises a closing member 26 closing the wheel ring 99 from an end 111, and the hydraulic motor 23 is thus enclosed by the wheel arm 81, the wheel ring 99, the closing member 26 and sealing members 27 therebetween to provide a sealed connection and a substantially tight hydraulic motor housing. In this way, well fluid surrounding the driving unit is kept out of the hydraulic motor housing 93. The hydraulic motor 23 is thus comprised in the same housing as the wheel assembly 90 so that the motor housing and the wheel housing are the same housing and thus the same fluid chamber. The solution of the present invention is thus very compact in order that the arm assembly 60 with the wheel assembly 90, when retracted in the driving unit housing 51, only takes up little space, so that the diameter of the driving unit 11 and thus of the downhole tool is not substantially increased when there are wheels at the end of the arms 60 of the driving unit 11.

The closing member 26 is directly connected with the hydraulic cylinder block for transmitting the rotational force of the hydraulic motor 23 to the wheel ring 99 in order to move the driving unit 11 forward in the well. In Figs. 5A and 5B, the hydraulic motor 23 is a radial piston motor in which the rotatable section 84 is a hydraulic cylinder block. The hydraulic cylinder block has cylinders 83 in which at least four pistons 82 move radially in relation to a wheel rotational axis of the wheel assembly 90 for providing the rotational force. The wheel arm 81 comprises fluid channels 85 for providing fluid to and from the hydraulic motor 23 through the stationary part 91 of the wheel assembly 90.

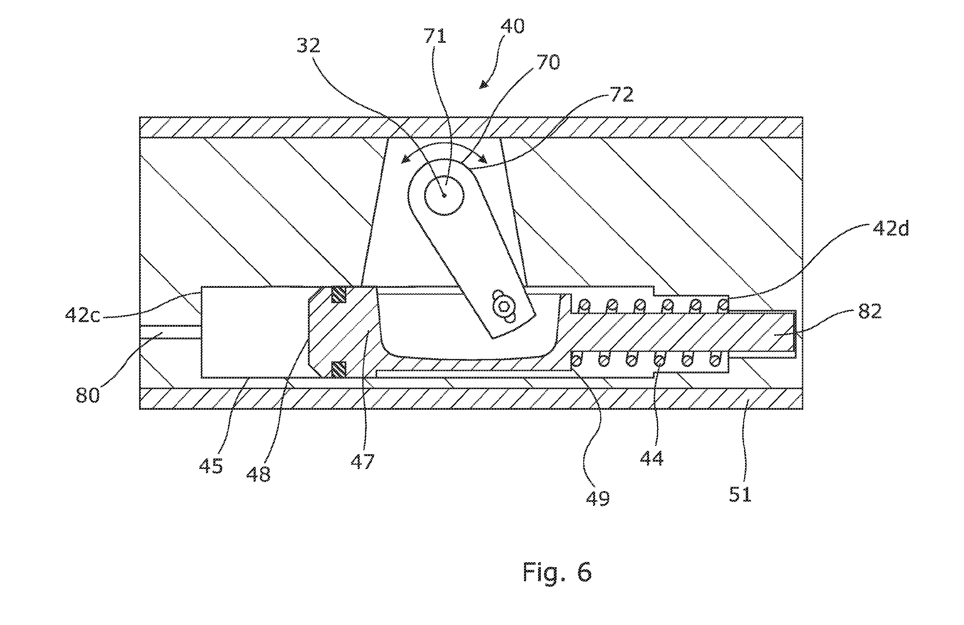

In Fig. 6, the arm activation assembly 41 is shown which is arranged in the driving unit housing 51 as indicated in Fig. 1 for moving the arm assemblies 60 between a retracted position and projecting position. The arm assembly 60 is fastened to one end of a crank member 71 which is rotated around a rotation axis 32 as indicated by arrows. This end is rotationally connected in relation to the housing, and the other end of the crank member is moved along the longitudinal axis of the driving unit 11 by means of a piston 47 moving in a piston housing 45. The piston is moved in a first direction by means of hydraulic fluid supplied by means of a pump and in an opposite and second direction by means of a spring member 44.

The arm assemblies 60 are moved in and out of the driving unit housing 51 between the projecting and retracted positions by means of an arm activation assembly 41 arranged in the driving unit housing 51 as indicated by the dotted lines. The arm activation assemblies 41 are driven by the hydraulic pump for moving the arm assemblies 60. The driving unit 11 is most often used for moving an operational tool into a specific position in the well or just forward in the well while an operation is performed, such as moving a logging tool forward while logging fluid and formation data in order to optimise the production of oil fluid from the well. Another operational tool could also be a stroker tool providing an axial force in one or more strokes, a key tool opening or closing valves in the well, positioning tools such as a casing collar locator (CCL), a milling tool or drilling tool, etc. The operational tool is connected through a connector 14.

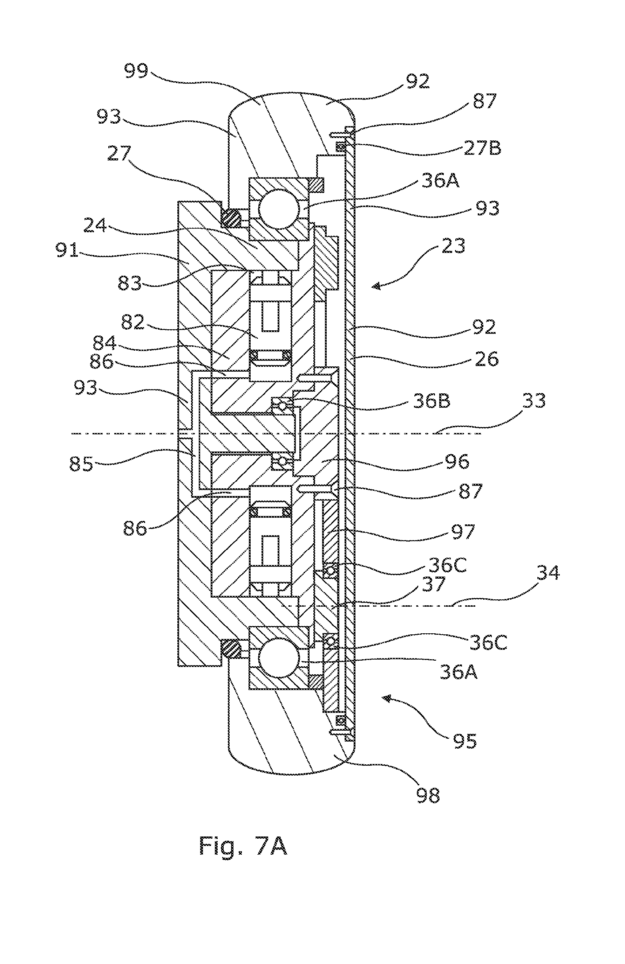

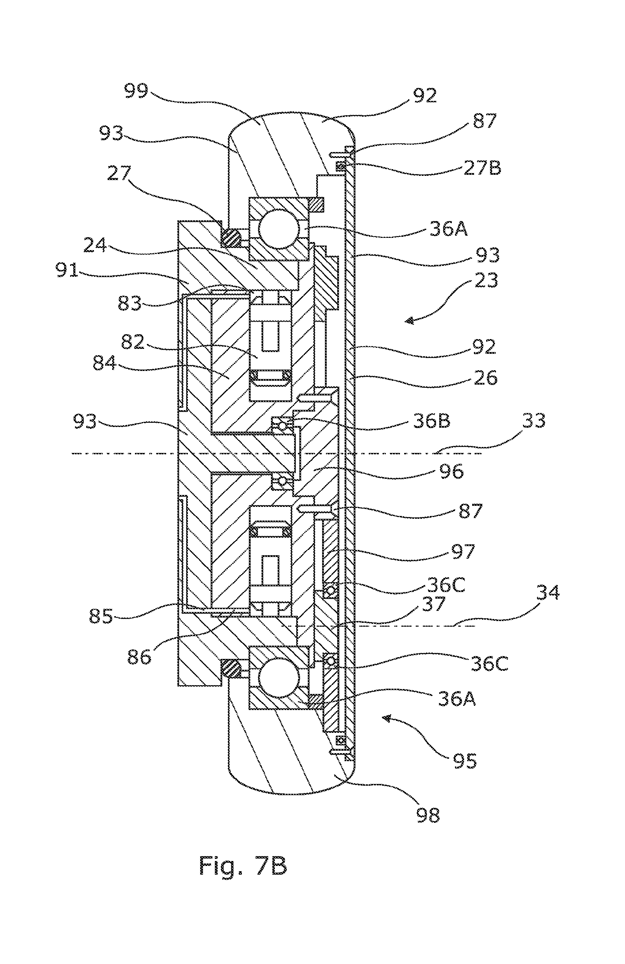

Figs. 7A and 7B show a cross-sectional view of the wheel assembly in Figs. 1 and 2. As shown, the wheel assembly 90 comprises a hydraulic motor 23 comprising a hydraulic motor housing 93 so that the stationary part 91 and the rotational part 92 constitute the hydraulic motor housing 93 of the hydraulic motor 23. The hydraulic motor 23 comprises a rotatable section 84 connected with the rotational part 92 for rotating part of the wheel assembly 90. In Figs. 7A and 7B, the wheel assemblies 90 are directly suspended in the driving unit housing 51 without any arm assemblies. The stationary part 91 is thus suspended in the driving unit housing 51 and comprises fluid channels for supplying fluid to and from the hydraulic motor 23. Furthermore, the cam ring 24 of the hydraulic motor 23 forms part of the stationary part 91 of the wheel assembly 90 as shown in Figs. 5A and 5B. Thus, the cam ring 24 is stationary and the ball bearing 36 is arranged on an outside of the cam ring 24 between the cam ring 24 and the wheel ring 99 in order to provide a simple and substantially friction-free transition between the rotatable wheel ring 99 and the stationary cam ring 24.

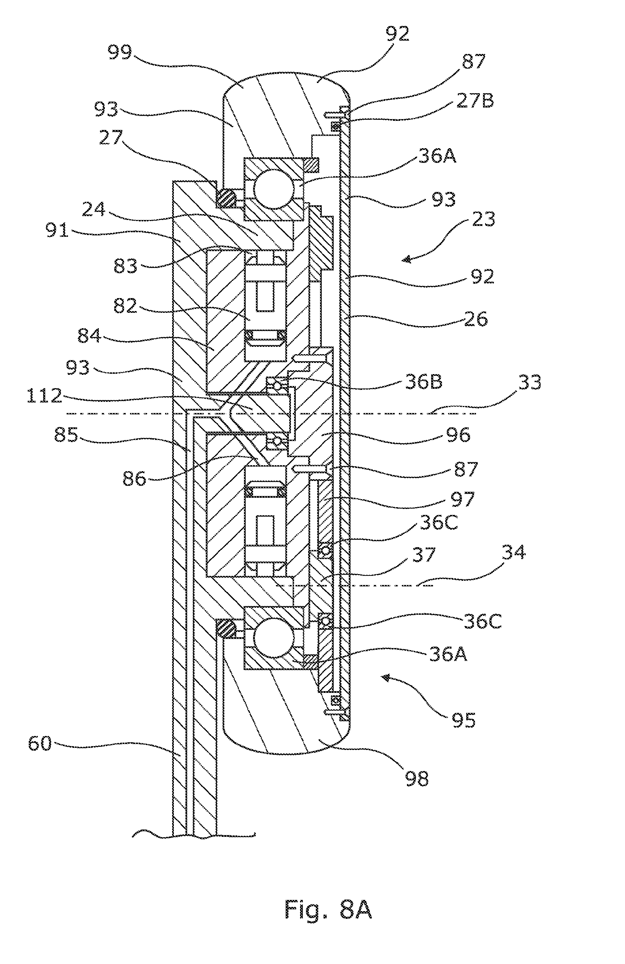

The wheel assembly 90 of Figs. 8A-9 further comprises a planetary gearing system 95 comprised in the hydraulic motor housing 93, and the rotatable section 84 of the hydraulic motor 23 is connected with a sun gear 96 of the planetary gearing system 95.

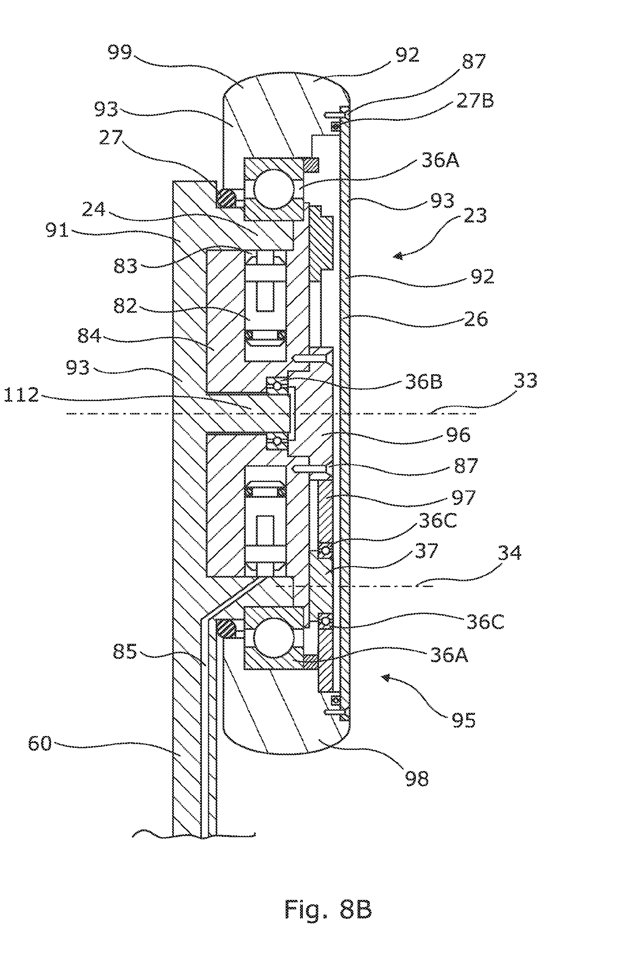

Figs. 8A and 8B show a cross-sectional view of the wheel assembly 90 arranged in one end of the arm assembly as shown in Figs. 3 and 4 in which the wheel assembly 90 also comprises a hydraulic motor 23 where the stationary part 91 and the rotational part 92 constitute the hydraulic motor housing 93 of the hydraulic motor 23. The arm assembly 60 comprises the wheel arm 81, and the stationary part 91 constitutes part of the wheel arm 81 as the cam ring 24 is formed as part of the wheel arm 81.

Also in Figs. 7A-9, the hydraulic motor 23 is a radial piston motor in which the rotatable section 84 is a hydraulic cylinder block having cylinders 83 in which at least six pistons 82 move radially in relation to a wheel rotational axis of the wheel assembly 90. In Figs. 8A-9, the wheel arm comprises fluid channels 85 for providing fluid to and from the hydraulic motor 23 through the stationary part 91 of the wheel assembly 90 in order to rotate the wheel of the driving unit and thus the driving unit.

In Figs. 5A, 7A and 8A, the pistons move in the cylinders forced outwards by the hydraulic fluid from the fluid channel 86 in the hydraulic cylinder block 84. This is due to the fact that the fluid channels 85 in the stationary part 91 are arranged opposite fluid channels 86 in the hydraulic cylinder block 84 so that fluid flows into the back of the cylinder and forces the piston outwards. Other pistons in the hydraulic cylinder block 84 are moved in the opposite direction by lobes in the cam ring forcing the pistons back into the cylinder as shown in Figs. 5B, 7B and 8B. In Figs. 5B, 7B and 8B, other fluid channels 85 in the stationary part 91 are arranged opposite the front of the cylinder so that fluid in the cylinder can be emptied and the piston moved towards the centre of the hydraulic cylinder block 84. In this way, the hydraulic cylinder block 84 rotates.

Furthermore, a ball bearing 36B is arranged between a projecting shaft 112 of the stationary part 91 of the wheel assembly 90 and the rotatable section 84 of the hydraulic motor 23. The shaft is stationarily arranged inside the hydraulic cylinder block and forms part of the wheel arm 81 or is connected with the wheel arm 81. The ball bearing is arranged around the shaft and in a recess in the hydraulic motor block.

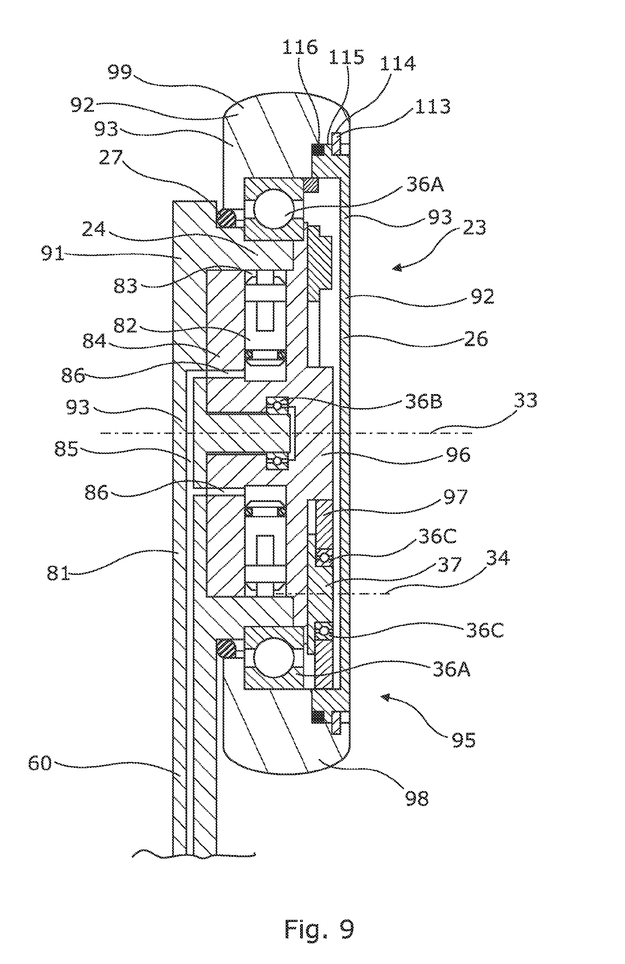

In Figs. 5A, 5B, 7A-8B, the closing member 26 is fastened to the wheel ring 99 by means of a screw but may be fastened in any other suitable manner. The closing member 26 has indentations matching recesses in the hydraulic cylinder block for transmitting the rotational force from the hydraulic cylinder block to the wheel ring 99. In Figs. 5A, 5B and 9, the hydraulic cylinder block drives the wheel ring via the closing member 26. The closing member 26 may be fastened in any other suitable manner for transmitting the rotational force from the hydraulic cylinder block. In Fig. 9, the closing member 26 is fastened to the wheel ring 99 by means of a snap ring 113 arranged in a groove 114 of the wheel ring 99 to keep a projecting flange 115 of the closing member firmly fastened to the wheel ring 99. In between the flange of the closing member 26 and the wheel ring 99, a sealing member 116 is arranged.

In Figs. 6A-7B, the planetary gearing system 95 comprises a sun gear 96 fastened to the rotatable hydraulic cylinder block by means of screws. The sun gear 96 drives the planet gears 97 which are connected through a carrier member 37, such as a carrier plate. The planet gears rotate around a planet gear rotational axis 34 and are rotatably connected with the carrier member 37 through a ball bearing 36B arranged between a projecting part of the carrier plate 37 and a hole in the planet gear. The planet gears mesh with the wheel ring 99 which, accordingly, functions as the ring gear 98 of the planetary gearing system 95. The carrier member 37 is screwed into the hydraulic motor block.

The planetary gearing system 95 is comprised in the hydraulic motor housing 93 and is connected directly to the hydraulic motor block. Thus, the hydraulic fluid inside the hydraulic cylinder block also surrounds the gears of the planetary gearing system 95 as they are comprised in the same motor housing. By arranging the planetary gearing system 95 directly in the hydraulic motor housing 93, the width of the wheel along the rotational axis 33 of the wheel assembly 90 is substantially reduced in relation to a planetary gearing system arranged outside the hydraulic motor housing 93. A small wheel width provides a smaller diameter of the driving unit, enabling the driving unit to enter also small diameter wells.

The closing member in Figs. 7A-8B is fastened to the wheel ring 99 by means of screws, and sealing members 27B are provided in a recess in the wheel ring 99. And when fastening the closing member to the wheel ring, the sealing member is squeezed in between the closing member 26 and the wheel ring 99 to provide a fluid-tight connection therebetween.

In Fig. 9, the sun gear 96 is provided as part of the hydraulic cylinder block. The planet gears mesh with the closing member 26 which, accordingly, functions as the ring gear 98 in the planetary gearing system 95. Thus, the wheel ring 99 is driven by the hydraulic cylinder block by driving the planet gears which drive the closing member 26 driving the wheel ring 99.

Furthermore, the fluid channels 86 in the hydraulic cylinder block supplying fluid to the motor are substantially parallel with the rotational axis of the wheel. The wheel arm 81 comprises fluid channels 85 aligned with the fluid channels 86 in the hydraulic cylinder block so that the fluid can flow freely from the arm to the motor. Only the channels supplying fluid to the motor are shown. By having the fluid channels of the hydraulic cylinder block substantially parallel to the rotational axis of the wheel, the fluid channels are much easier to manufacture.

In order to be able to roll along the cam ring 24, the pistons moving in the cylinders of the hydraulic cylinder block are provided with a ball bearing 117. The central part of the ball bearing is suspended in a piston body of the piston and an outermost part of the ball bearing abuts the cam ring, the ball bearing thus being capable of rotating in relation to the piston.

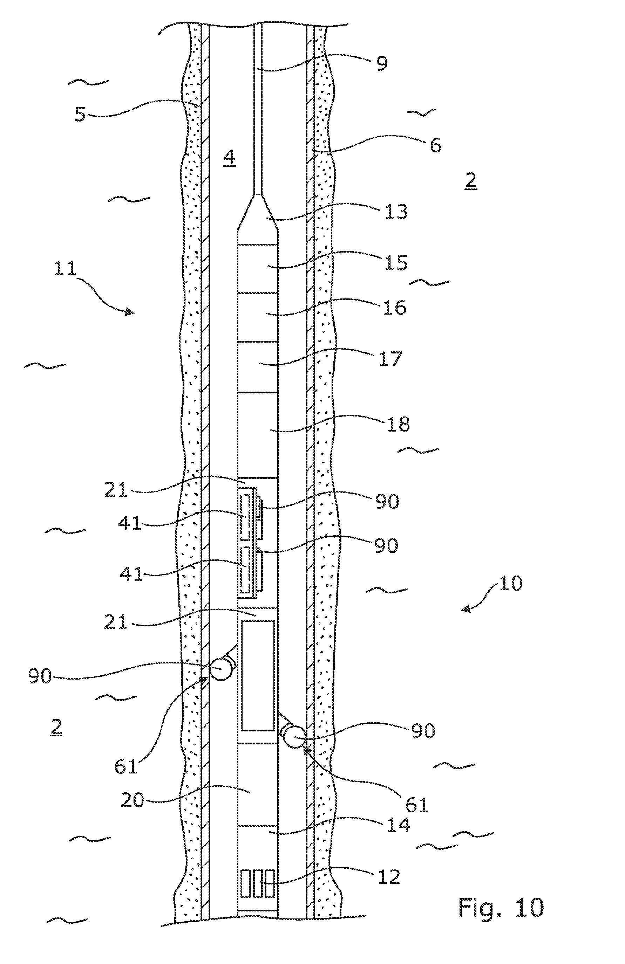

The invention further relates to a downhole system as shown in Fig. 10, in which the driving unit 11 is connected to an operational tool which, in this case, is a logging tool logging fluid and formation data. The operational tool could also be a stroker tool providing an axial force in one or more strokes, a key tool opening or closing valves in the well, positioning tools such as a casing collar locator (CCL), a milling tool or drilling tool, etc.

By well fluid is meant any kind of fluid that may be present in oil or gas wells downhole, such as natural gas, oil, oil mud, crude oil, water, etc. By gas is meant any kind of gas composition present in a well, completion, or open hole, and by oil is meant any kind of oil composition, such as crude oil, an oil-containing fluid, etc. Gas, oil, and water fluids may thus all comprise other elements or substances than gas, oil, and/or water, respectively.

By a casing is meant any kind of pipe, tubing, tubular, liner, string etc. used downhole in relation to oil or natural gas production.

Although the invention has been described in the above in connection with preferred embodiments of the invention, it will be evident for a person skilled in the art that several modifications are conceivable without departing from the invention as defined by the following claims.

## Claims

1. A downhole driving unit (11) for insertion into a well, comprising:
- a driving unit housing (51),
- a hydraulic motor (23) comprising a hydraulic motor housing (93), the hydraulic motor comprising a cam ring (24),
- a wheel assembly (90) comprising a stationary part (91) and a rotational part (92), the stationary part being connected with the driving unit housing and rotatably connected with a rotational part, the stationary part and the rotational part constituting the hydraulic motor housing, said hydraulic motor comprising a rotatable section (84) connected with the rotational part, the cam ring being connected with or forming part of the stationary part of the wheel assembly, the rotational part comprising a wheel ring (99),
wherein a bearing (36) is arranged between the cam ring and the wheel ring.

2. A downhole driving unit according to claim 1, wherein the hydraulic motor is a radial piston motor.

3. A downhole driving unit according to claim 1 or 2, further comprising an arm assembly (60) movable between a retracted position and a projecting position in relation to the driving unit housing, and wherein the arm assembly is connected with or forms part of the stationary part of the wheel assembly.

4. A downhole driving unit according to claim 3, further comprising an arm activation assembly (41) arranged in the driving unit housing for moving the arm assembly between the retracted position and the projecting position.

5. A downhole driving unit according to any of the preceding claims, wherein the wheel assembly further comprises a planetary gearing system (95).

6. A downhole driving unit according to claim 5, wherein the rotatable section of the hydraulic motor is connected with a sun gear (96) of the planetary gearing system.

7. A downhole driving unit according to claim 5 or 6, wherein the planetary gearing system is comprised in the hydraulic motor housing.

8. A downhole driving unit according to any of the preceding claims, wherein the rotational part comprises a wheel ring (99) closed from one end by a closing member (26).

9. A downhole driving unit according to any of the preceding claims, wherein the planetary gearing system comprises a ring gear (98) constituted by the wheel ring or the closing member.

10. A downhole driving unit according to any of the preceding claims, wherein the arm assembly comprises a wheel arm (81) and the wheel arm comprises fluid channels (85) for providing fluid to and from the hydraulic motor through the stationary part.

11. A downhole driving unit according to any of the preceding claims, wherein the rotatable section is a hydraulic cylinder block.

12. A downhole driving unit according to any of the preceding claims, wherein the hydraulic cylinder block comprises cylinders (83) in which a piston (82) moves in each of the cylinders, the piston comprising a piston body and a ball bearing suspended in a piston body so that the ball bearing abuts the cam ring.

13. A downhole system comprising the driving unit according to any of claims 1-12 and an operational tool connected with the driving unit for being moved forward in a well or borehole.

14. A downhole system according to claim 13, wherein the operational tool is a stroker tool, a key tool, a milling tool, a drilling tool, a logging tool, etc.

15. Use of the driving unit according to any of claims 1-12 in a well or borehole for moving itself and/or an operational tool forward in a well or borehole.
